# EUROPEAN PATENT SPECIFICATION

(11) **EP 4 375 089 B1**
(45) Date of publication and mention of the grant of the patent: **02.07.2025**
(21) Application number: 23208871.6
(22) Date of filing: 09.11.2023
(51) Int. Cl.: B60C 11/12, B60C 11/00

(54) **TIRE**
REIFEN
PNEUMATIQUE

(30) Priority: 24.11.2022 JP 2022187523
(43) Date of publication of application: 29.05.2024
(73) Proprietor: Sumitomo Rubber Industries, Ltd., Kobe-shi, Hyogo 651-0072 (JP)
(72) Inventor: MIYOSHI, Kosuke, Kobe-shi, 651-0072 (JP); HASHIMOTO, Yuto, Kobe-shi, 651-0072 (JP); NAKAJIMA, Sho, Kobe-shi, 651-0072 (JP); SANAE, Ryuhei, Kobe-shi, 651-0072 (JP)
(74) Representative: Manitz Finsterwald Patent- und Rechtsanwaltspartnerschaft mbB

(56) References cited:
- WO-A1-2021/216041
- DE-A1- 102020 201 730
- DE-A1- 102020 212 456
- DE-A1- 102021 114 830
- JP-A- 2022 048 823
- US-A1- 2014 166 173
- US-A1- 2019 381 837

## Description

### Technical field

The present invention relates to a tire.

### Background art

Patent Document 1 below discloses a pneumatic tire intended for use in the winter season.

In this tire, an outside shoulder land portion is divided into a plurality of outside shoulder blocks by a plurality of outside shoulder lateral grooves extending in the tire axial direction. The outside shoulder block is divided by a narrow groove extending in the tire circumferential direction into a first block piece on the outside tread edge side and a second block piece on the inside tread edge side.

The first block piece is provided with first sipes, and the second block piece is provided with second sipes.

The total number of the second sipes of the second block piece is greater than the total number of the first sipes of the first block piece.

Patent Document 1: Japanese Patent Application Publication No.2021-195051

A further state o the art tire is disclosed in DE 10 2020 212456 A1.

### Summary of the Invention

### Problems to be solved by the Invention

In recent years, winter tires provide with a large number of sipes in land portions are required to have further improved on-ice performance.

In such a siped tire, the bottom of the sipe is likely to be distorted by the collapse of the land portion due to the load applied when the land portion contacts with the ground. As a result, cracks starting from the sipe bottom are likely to occur. Thus, such tire is required to be improved in durability of the bottom portion of the sipe against a load when contacting with the ground (hereinafter referred to as the "loading durability").

on the other hand, in the case of siped tires, it is also necessary to ensure mold releasability during vulcanization molding (namely, easiness of demolding a tire from the vulcanization mold).

In view of the above circumstances, the present invention was made, and a primary objective thereof is to provide a tire with improved on-ice performance and loading durability while ensuring mold releasability.

### Means for solving the Problems

According to the present invention, a tire comprises a tread portion provided with a plurality of circumferential grooves extending continuously in a tire circumferential direction, a plurality of lateral grooves extending in a tire axial direction, and a plurality of first blocks,
wherein
each of the first blocks is provide with at least one first sipe which extends zigzag in its cross section perpendicular to the length direction thereof, and extends zigzag in a cross-section parallel with the ground contacting top surface of the first block,
each of the first sipes is provided with
   at least one tie bar which is locally raised outward in a tire radial direction from the sipe bottom, and terminated without reaching the ground contacting top surface of the first block so that the first sipe is partially divided in the length direction of the sipe by the above-said at least one tie bar into at least a first portion and a second portion,
in each of the first sipes, the sipe bottom of the first portion communicates with a first wide portion having a groove width larger than the sipe width of the first portion, and the sipe bottom of the second portion communicates with a second wide portion having a groove width larger than the sipe width of the second portion,
the above-said first wide portion comprises, in its cross section,
   an outer portion in the tire radial direction formed by a pair of first arcuate groove wall portions each convex toward a center line of the first sipe so that the groove width continuously increases from the sipe bottom toward the inner side in the tire radial direction, and
   an inner portion in the tire radial direction formed by a pair of second arcuate groove wall portions each convex toward the opposite side to the center line of the first sipe so that the groove width continuously decreases inward in the tire radial direction to the bottom of the first wide portion, and
the first wide portion and the second wide portion do not communicate with each other.

Furthermore, a curvature radius of the first arcuate groove wall portion is larger than a curvature radius of the second arcuate groove wall portion, wherein the curvature radius is not more than 5.0 times the curvature radius.

### Effects of the Invention

In the present invention, therefore, the tire can be improved in on-ice performance and the loading durability, while ensuring the mold releasability.

### Brief description of the drawings

Fig.1 is a developed partial view of a tread portion of a tire as an embodiment of the present invention.
Fig.2 is a cross-sectional view of the tread portion of Fig.1.
Fig.3 is an enlarged view showing tow of first blocks in Fig.1.
Fig.4 is an enlarged perspective view conceptually showing the interior space of the first sipe.
Fig.5 is a cross-sectional view taken along line AA of Fig.3.
Fig.6 is a cross-sectional view of the first sipe shown in Fig.3 taken along a plane parallel to the ground contacting top surface of the first block.
Fig.7 is a cross-sectional view taken along line BB of Fig.3.
Fig.8 is an enlarged view of the first wide portion in Fig.5.
Fig.9 is an enlarged cross-sectional view of the second wide portion taken along line CC of Fig.3.

### Detailed description of the Invention

An embodiment of the present invention will now be described in detail in conjunction with accompanying drawings.

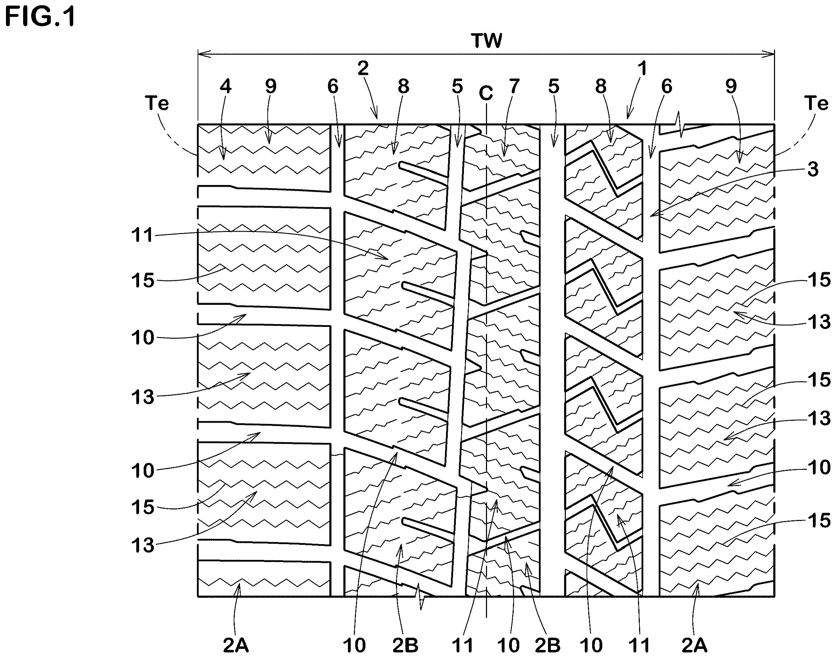

Fig.1 is a developed partial view of a tread portion 2 of a tire 1 as an embodiment of the present invention.

The tire 1 of the present invention shown in Fig.1 is intended for use in winter.

In the present embodiment, the tire 1 is designed as a pneumatic tire for passenger cars.

The present invention is however, not limited to such pneumatic tire, and may be applied, for example, to heavy duty tires.

The tread portion 2 comprises a plurality of circumferential grooves 3 continuously extending in the tire circumferential direction between two tread edges Te, and a plurality of land portions 4 axially divided by these circumferential grooves 3.

The tread edge Te corresponds to the outermost contact position in the tire axial direction when the tire 1 in its normal state is contact with a flat horizontal surface at a camber angle of 0 degrees and loaded with 70% of a normal load therefor.

In the case of pneumatic tires for which various standards have been established, the "normal state" is a state of a tire in which the tire is mounted on a regular rim, inflated to a normal internal pressure, and loaded with no tire load.

In the case of tires or non-pneumatic tires for which various standards are not defined, the "normal state" means a standard usage state according to the purpose of use of the tire, and a state in which the tire is not mounted on the vehicle and no load is applied.

In this specification, unless otherwise noted, dimensions, positions and the like of each part or portion of the tire refer to those under the normal state.

In addition, in the present specification, known methods can be appropriately applied to the method for measuring the dimensions, positions and the like unless otherwise noted.

The "regular rim" means a wheel rim specified for the tire by a standard system including standards on which the tire is based, for example, "Standard Rim" in JATMA, "Design Rim" in TRA and "Measuring Rim" in ETRTO.

The "normal internal pressure" is the air pressure specified for the tire by a standard system including standards on which the tire is based, for example, the maximum air pressure in JATMA, the maximum value listed in the table "TIRE LOAD LIMITS AT VARIOUS COLD INFLATION PRESSURES" in TRA, and the "Inflation Pressure" in ETRTO.

In the case of a pneumatic tire for which various standards have been established, the "normal load" is a tire load specified for the tire by a standard system including standards on which the tire is based, for extreme, the maximum load capacity in JATMA, the maximum value listed in the table "TIRE LOAD LIMITS AT VARIOUS COLD INFLATION PRESSURES" in TRA, and the load capacity in ETRTO.

In the case of a tire for which various standards have not yet been established, the "normal load" is the maximum load which can be applied to the tire when used.

The tread portion 2 in the present embodiment is provided with four circumferential grooves 3: two crown circumferential grooves 5 and two shoulder circumferential grooves 6.

The two crown circumferential grooves 5 are arranged so as to sandwich the tire equator C.

The two shoulder circumferential grooves 6 are arranged so as to sandwich the two crown circumferential grooves 5.

The present invention is however, not limited to such groove arrangement.

For the circumferential grooves 3, various mode, for example, straight grooves, zigzag grooves and the like may be adopted.

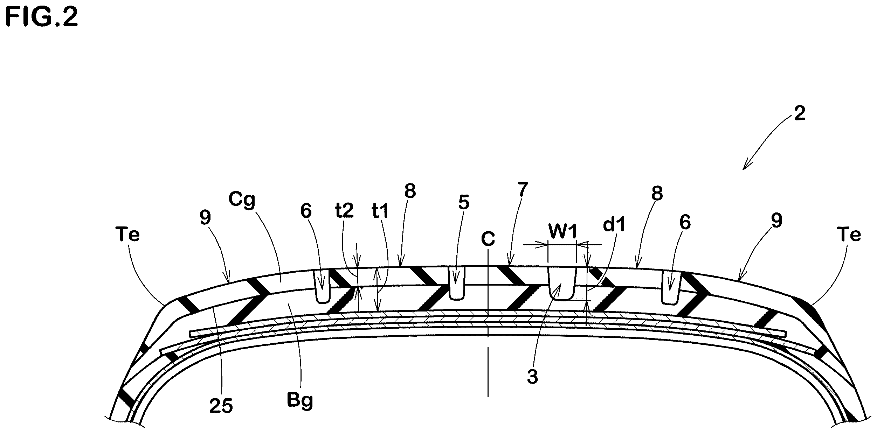

Fig.2 conceptually shows a cross section of the tread portion 2, and cross sections of sipes and lateral grooves observed in a plan view of the tread portion 2 are omitted in Fig.2.

As shown in Fig.2, the groove widths of the circumferential grooves 3 are preferably at least 3 mm.

The maximum groove width W1 among the circumferential grooves 3 is, for example, 2.0% to 5.0% of the tread width TW (shown in Fig.1).

The maximum depth d1 among the circumferential grooves 3 is, for example, 5 to 15 mm.

The tread width TW corresponds to the distance in the tire axial direction from one tread edge Te to the other tread edge Te under the normal state.

As shown in Fig.1, by the four circumferential grooves 3, the tread portion 2 in the present embodiment is axially divided into five land portions 4: one crown land portion 7, two middle land portions 8, and two shoulder land portions 9.

The crown land portion 7 is defined between the two crown circumferential grooves 5.

Each of the middle land portion 8 is defined between one of the two crown circumferential groove 5 and one of the two shoulder circumferential groove 6.

Each of the shoulder land portion 9 is defined between one of the shoulder circumferential grooves 6 and the adjacent tread edge Te.

The tread portion 2 in the present embodiment is provided with a plurality of lateral grooves 10.

By the lateral grooves 10, each of the land portions 4 is circumferentially divided into a row of plurality of blocks 11. The blocks 11 include first blocks 13 in the shoulder land portions 9 forming the tread edges Te.

Each of the first blocks 13 is provided with at least one first sipe 15.

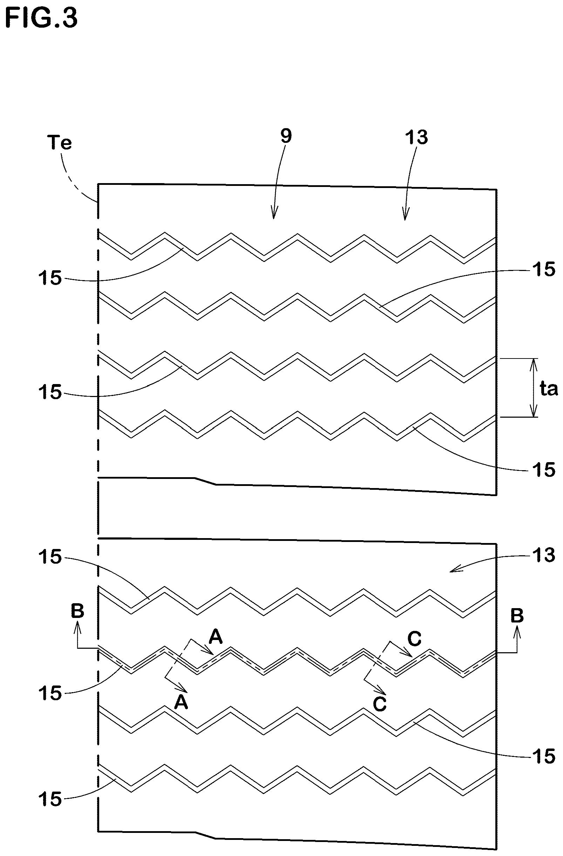

In the present embodiment, each of the first blocks 13 is provided with a plurality of first sipes 15 as shown in Fig.3 which shows, for example, two of the circumferentially adjacent first blocks 13 in the shoulder land portion 9 on the left side of Fig.1.

The term "sipe" refers to means a narrow groove having a width not more than 1.5 mm between two opposite inner walls inclusive of a cut having no substantial width.

Such a sipe however, may be provided with a chamfer at one of or each of the opening edges.

In the present embodiment, at the bottom of the first sipe 15, the first sipe 15 communicates with a wide portion as described later.

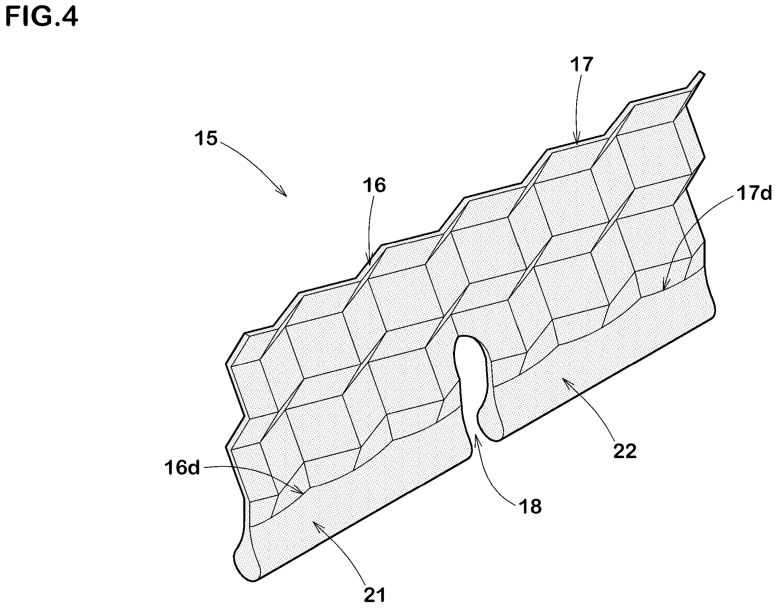

Fig.4 conceptually shows the interior space of the first sipe 15, wherein the interior space is lightly dotted.

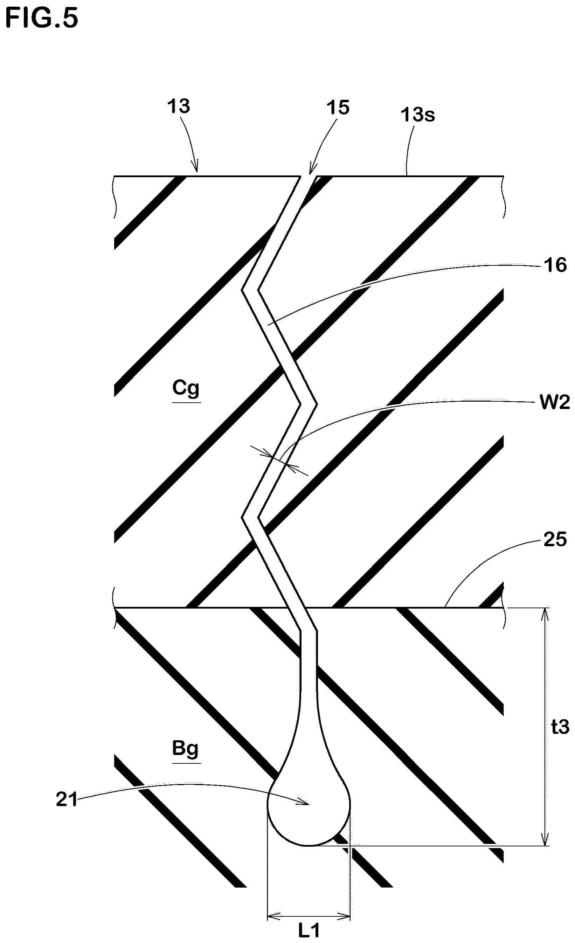

Fig.5 shows a cross section of the first sipe 15 and a cross section of a first wide portion 21 taken orthogonal to the sipe length direction, corresponding to a cross-sectional view taken along line AA in Fig.3.

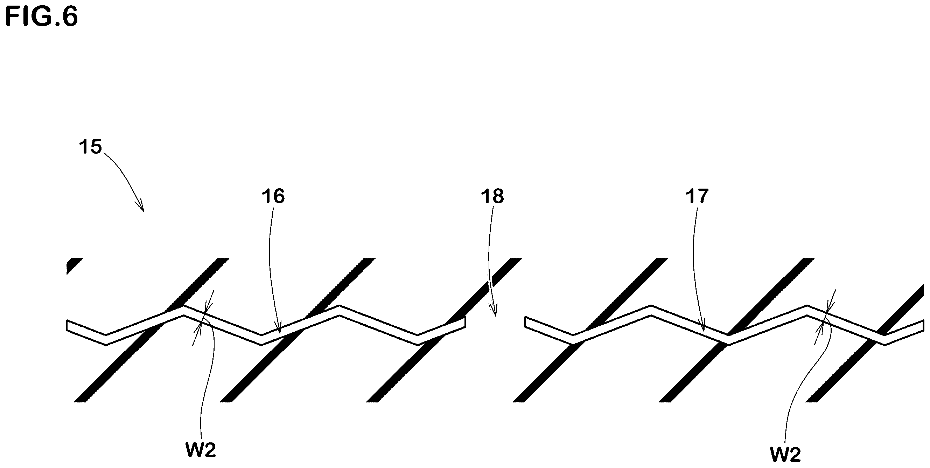

Fig.6 shows a cross section of the first sipe shown in Fig.3 taken along a plane parallel to the ground contacting top surface of the first block 13.

As shown in Figs.4 to 6, the first sipe 15 in the present embodiment extends in a zigzag shape in a cross section orthogonal to the sipe length direction, and extends in a zigzag shape in a cross section parallel to the ground contacting top surface of the first block 13.

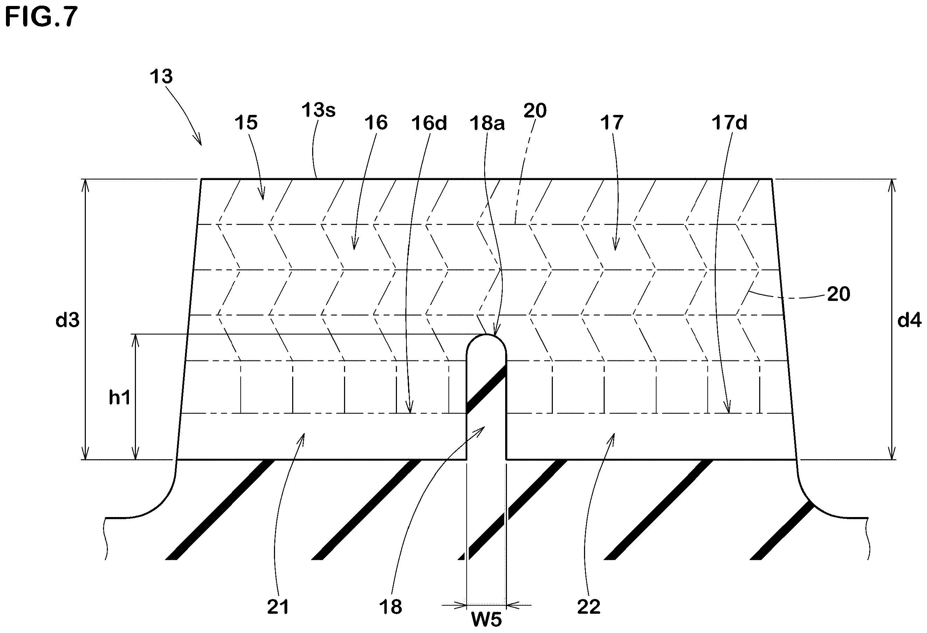

Fig.7 shows a cross section of the first sipe 15 taken along its length direction, corresponding to a cross-sectional view taken along line BB of Fig.3.

In Fig.7, ridge and valley lines 20 partitioning convexes and concaves formed in the two opposite inner walls are shown by two-dot chain lines.

As shown in Fig.7, the first sipe 15 is provided with at least one tie bar 18, and thereby partially divided (near the bottom) in the length direction of the sipe into at least a first portion 16 and a second portion 17.

The tie bar 18 locally protrudes outward in a tire radial direction from the sipe bottom (in this example, from the bottoms of the wide portions 21 and 22) and terminates without reaching the ground contacting top surface 13s of the first block 13.

By an imaginary line (not shown) obtained by radially outwardly extending the center line in the sipe length direction of the tie bar 18, the portion of the first sipe 15 between the radially outer end of the tie bar 18 and the ground contacting top surface 13s of the first block 13, is virtually divided into two portions which is explained hereunder as being included in the first portion 16 and the second portion, respectively.

As shown in Fig.4, the first wide portion 21 communicates with the sipe bottom 16d of the first portion 16. As shown in Fig.5, the first wide portion 21 has a groove width larger than the sipe width in the first portion 16.

Further, as shown in Fig.4, a second wide portion 22 communicates with the sipe bottom 17d of the second portion 17. The second wide portion 22 has a groove width larger than the sipe width in the second portion 17.

In the present embodiment, unless otherwise noted, the configuration of the first wide portion 21 can be applied to the second wide portion 22.

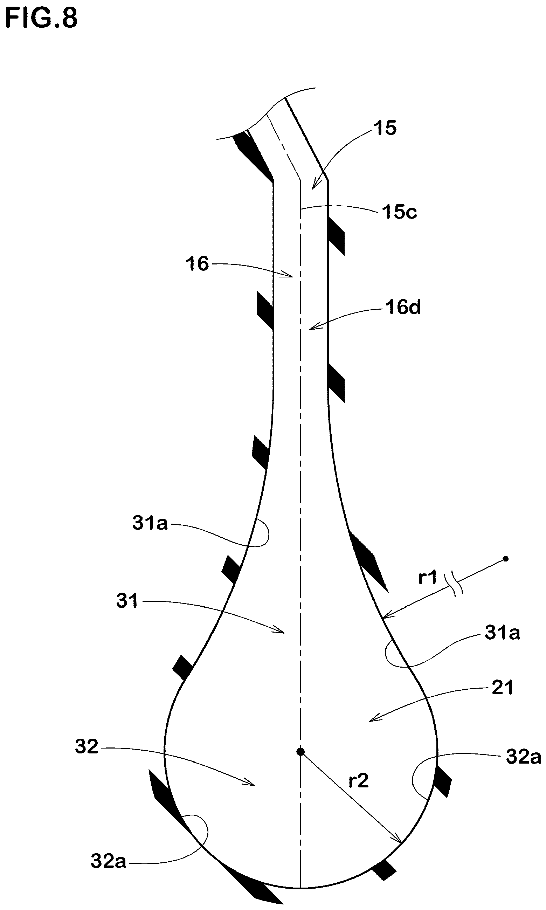

Fig.8 is an enlarged cross-sectional view of the first wide portion 21 shown in Fig.5.

As shown in Fig.8, the first wide portion 21 comprises an outer portion 31 in the tire radial direction and an inner portion 32 in the tire radial direction at least.

Further, in the cross-sectional view of the first wide portion 21, the outer portion 31 is formed by a pair of opposite first arcuate groove wall portions 31a which are convex toward a center line 15c of the first sipe 15

so that the groove width of the outer portion 31 continuously increases inward in the tire radial direction from the sipe bottom 16d of the first portion 16.

The center line 15c is a center line in the width direction of the first sipe 15 which is extended to the bottom of the first wide portion 21.

The inner portion 32 is formed by a pair of opposite second arcuate groove wall portions 32a convex toward the opposite side to the center line 15c of the first sipe 15
so that the groove width continuously decreases inward in the tire radial direction to the bottom of the first wide portion 21.

Further, as shown in Fig.4, in the present embodiment, the first wide portion 21 and the second wide portion 22 do not communicate with each other.

By adopting the above-described configuration, the tire 1 of the present embodiment can be improve in on-ice performance and loading durability while ensuring the mold releasability. The reason is as follows.

The first sipe 15 extends zigzag as described above. Further, the first sipe 15 is divided into the first portion 16 and the second portion 17 by the tie bar 18.

In such first sipe 15, when a load at the time of contacting with the ground acts on the first block 13, the sipe walls facing each other are strongly engaged with each other, and the rigidity of the first block 13 is maintained.

Further, the tie bars 18 helps to maintain the rigidity of the first block 13.

As a result, the collapse of the first block 13 is effectively suppressed; the strain at the sipe bottom of the first sipe 15 can be suppressed; and the loading durability is improved.

Further, as shown in Fig.4, the first sipe 15 communicates with the first wide portion 21 and the second wide portion 22 which are not in communication with each other.

As a result, even if the first block 13 falls down, the strain is dispersed at the sipe bottom of the first sipe 15, and the damage can be suppressed.

Furthermore, since the first block 13 is prevented from collapsing by the mechanism described above, it is possible to ensure a large ground contact area when traveling on ice, and to obtain a large frictional force on ice due to the edge effect of the first sipe 15.

In addition, since the first sipe 15 communicates the first wide portion 21 and the second wide portion 22, the first sipe 15 exhibits excellent water absorption performance, which further enhances on-ice performance.

Furthermore, since the outer portion 31 is formed by the first arcuate groove wall portions 31a and the inner portion 32 is formed by the second arcuate groove wall portions 32a,
the thick tip portion of a knife blade which forms the first wide portion 21 can be smoothly taken out from through the sipe during vulcanization molding, therefore, the mold releasability can be ensured.

For the above reasons, the tire 1 of the present embodiment can be improved in on-ice performance and loading durability while ensuring mold releasability.

A more detailed configuration of the present embodiment will be described below. Each configuration described below represents a specific aspect of the present embodiment. Therefore, the present invention can exhibit the above effects even if it does not have the configuration described below. Further, even if any one of the configurations described below is applied singly to the tire of the present invention having the features described above, an improvement in performance corresponding to each configuration can be expected. Furthermore, when some of the respective configurations described below are applied in combination, it is possible to expect a combined improvement in performance according to each configuration.

When the tread portion 2 is axially divided into four equal parts, namely, two axially outer parts 2A and two axially inner parts 2B, it is preferable that the above-described first blocks 13 disposed in the land portion 4 included in the axially outer parts 2A as shown in Fig.1.

In the present embodiment, the first blocks 13 are disposed in the shoulder land portion 9 as the blocks 11 thereof, and the first blocks 13 forms the tread edges Te.

Thus, as the first sipes 15 are formed in the shoulder land portions 9 where the ground contact pressure tends to increase, the loading durability is reliably improved.

It is preferable that a plurality of the first sipes 15 are provided per first block 13 as shown in Fig.3.

In the present embodiment, four first sipes 15 are provided per first block 13.

Each of the four first sipes 15 extends across the first block 13 in the tire axial direction.

Further, in the present embodiment, except for the first sipes 15, no sipe or groove is provided in the first block 13.

However, the present invention is not limited to such example. For example, the first block 13 may be provided with a narrow grooves extending in the tire circumferential direction.

The interval "ta" between the circumferentially adjacent first sipes 15 (corresponds to the distance in the tire circumferential direction between the sipes' center lines) is, for example, set in a range from 3.0 to 7.0 mm, preferably from 4.0 to 6.0 mm.

Thereby, it is possible to exhibit excellent on-ice performance while suppressing uneven wear of the first blocks 13.

As shown in Fig.5, the first sipe 15 extends in the tire radial direction with a constant width W2 in its cross section. Further, as shown in Fig.6, the first sipe 15 extends in its length direction with the constant width w2.

That is, the first sipe 15 in the present embodiment extends with the constant width w2 over its entirety.

For example, the width w2 is 1.0 mm or less, preferably 0.2 to 0.7 mm. Thereby, the loading durability and on-ice performance are improved in a well-balanced manner.

The present invention is however, not limited to such a dimension. The dimension may include inevitable errors in rubber products such as tires, therefore, in this context, the width of the first sipe 15 may vary depending on its measurement position.

Even in such case, however, it is preferable that the ratio W2M/w2m between the maximum value W2M and the minimum value w2m of the width of the first sipe 15 is 2.0 or less. The maximum value W2M is preferably 0.4 to 0.7 mm. The minimum value w2m is desirably 0.2 to 0.4 mm.

As shown in Fig.7, the maximum depth d3 from the ground contacting top surface 13s of the first block 13 to the bottom of the first wide portion 21 is from 4.0 to 9.0 mm.

The maximum depth d4 from the ground contacting top surface 13s of the first block 13 to the bottom of the second wide portion 22 is from 4.0 to 9.0 mm.

Thereby, the loading durability and on-ice performance can be improved in a well-balanced manner.

In the present embodiment, as a preferable arrangement, the depth d3 and the depth d4 are the same.

The above-mentioned tie bar 18 is arranged, for example, in a central part when the first sipe 15 is divided into three equal parts in the sipe length direction.

In the present embodiment, as a preferable arrangement, the tie bar 18 is arranged so as to include the center position of the first sipe 15 in the longitudinal direction. Thereby, local deformation of the first sipe 15 is suppressed, and excellent loading durability is exhibited.

In the present embodiment, the tie bar 18 extends in the tire radial direction with a constant width, and
a radially outer end 18a of the tie bar 18 has an arcuate outer surface which is convex toward the ground contacting top surface 13s of the first block 13.

In the cross section of the first sipe 15 along its length direction, the maximum width w5 of the tie bar 18 is, for example, in a range from 0.5 to 5.0 mm.

The height h1 from the bottom of the first wide portion 21 to the radially outer extreme end of the tie bar 18 is preferably not less than 30%, more preferably not less than 40%, but preferably not more than 80%, more preferably not more than 70% of the maximum depth d3 from the ground contacting top surface 13s of the first block 13 to the bottom of the first wide portion 21.

such tie bars 18 serve to improve the loading durability and on-ice performance in a well-balanced manner.

As shown in Fig.4, the first wide portion 21 extends linearly in the length direction of the first sipe 15 while maintaining the shape and area in the cross section of the first wide portion 21.

Thereby, except for the portion communicating with the first sipe 15, the first wide portion 21 has a columnar shape extending in the length direction of the sipe with a constant cross-sectional shape.

The central axis of the first wide portion 21, which can be defined by a set of centroids of the cross sectional shapes of the first wide portion 21 at positions along the length thereof, extends linearly.

As shown in Fig.5, the maximum width L1 in the cross section of the first wide portion 21 is preferably not less than 2.0 times, more preferably not less than 3.0 times, but preferably not more than 6.0 times, more preferably not more than 5.0 times the width of the first sipe 15 in the cross section.

Thereby, the above-described effects can be obtained while demonstrating excellent mold releasability during tire production.

Here, the width of the first sipe 15 in the cross section means the constant width w2 in the present embodiment, and when the width varies depending on the measurement position, it means the maximum width.

It is preferable that, in the first wide portion 21, as shown in Fig.8, the curvature radius r1 of the first arcuate groove wall portions 31a is larger than the curvature radius r2 of the second arcuate groove wall portions 32a.

The curvature radius r1 is preferably not more than 5.0 times the curvature radius r2.
the curvature radius r2 is preferably 1.2 to 2.0 times the width between the two inner walls of the sipe. This will reliably improve the mold releasability.

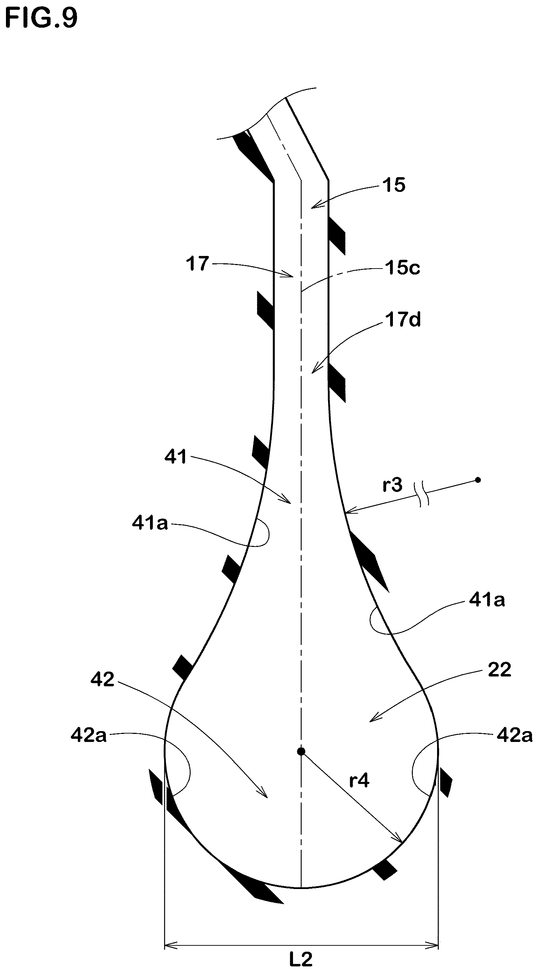

Fig.9 is an enlarged cross-sectional view of the second wide portion 22 corresponding to the cross-sectional view taken along line CC in Fig.3.

As shown, the second wide portion 22 comprises a radially outer portion 41 and a radially inner portion 42.

In the cross-sectional view of the second wide portion 22, the outer portion 41 is formed by a pair of opposite first arcuate groove wall portions 41a each convex toward the sipe center line 15c of the first sipe 15,
so that the groove width increases continuously and inwardly in the tire radial direction from the sipe bottom 17d in the second portion 17.

The inner portion 42 is formed by a pair of opposite second arcuate groove wall portions 42a each convex toward the opposite side to the sipe center line 15c of the first sipe 15 so that the groove width decreases continuously toward the radially inside.

Thereby, the thick tip end portion of the knife blade forming the second wide portion 22 can be smoothly taken out from through the sipe, and the mold releasability can be ensured more reliably.

The second wide portion 22 has the same configuration as the first wide portion 21. That is, the above-described configuration of the first wide portion 21 can also be applied to the second wide portion 22.

Therefore, as shown in Fig.4, the second wide portion 22 extends linearly along the length direction of the second portion 17 over its entire length.

Further, as shown in Fig.9, in the second wide portion 22, the curvature radius r3 of the first arcuate groove wall portions 41a is larger than the curvature radius r4 of the second arcuate groove wall portions 42a.

The curvature radius r1 of the first wide portion 21 described above can be applied to the curvature radius r3.

The curvature radius r2 of the first wide portion 21 described above can be applied to the curvature radius r4.

Therefore, description of the numerical ranges for the curvature radii r3 and r4 is omitted.

The maximum width L2 of the second wide portion 22 in its cross section is preferably not less than 2.0 times, more preferably not less than 3.0 times, but preferably not more than 6.0 times, more preferably not more than 5.0 times the width of the first sipe 15 in its cross section.

As shown in Fig.4, the ratio v1/v2 between the volume v1 of the first wide portion 21 and the volume v2 of the second wide portion 22 is about 0.8 to 1.2. Namely, these volumes are substantially the same.

As a modified example, it may be possible that the first wide portion 21 is arranged on the tread edge Te side of the second wide portion 22, and the volume V1 of such axially outer first wide portion 21 is larger than the volume V2 of the axially inner second wide portion 22.

In this case, the volume V1 is preferably set in a range from 120% to 150% of the volume v2.

In this example, since the first wide portion 21 arranged near the tread edge Te can exhibit excellent water absorbency, it is possible to focus on improving the on-ice performance. Further, an improvement in wandering performance can be expected.

As still another example, it may be possible that the first wide portion 21 is arranged on the tread edge Te side of the second wide portion 22, and the volume v1 of such axially outer first wide portion 21 is smaller than the volume v2 of the axially inner second wide portion 22.

In this case, the volume V1 is preferably set in a range from 50% to 80% of the volume v2.

In this example, since the volume of the first wide portion 21 arranged near the tread edge Te is small, uneven wear near the tread edge Te can be suppressed.

In the present embodiment, as shown in Fig.2, the tread portion 2 comprises a cap tread rubber layer Cg and a base tread rubber layer Bg.

The cap tread rubber layer Cg forms the ground contacting surface of the tread portion 2.

The base tread rubber layer Bg is arranged radially inside the cap tread rubber layer Cg.

The cap tread rubber layer Cg has a rubber hardness in a range from 40 to 65 degrees, for example.

The base tread rubber layer Bg has a rubber hardness larger than that of the cap tread rubber layer Cg.

The rubber hardness of the base tread rubber layer Bg is, for example, in a range from 50 to 75 degrees.

In this application, the rubber hardness means a type-A durometer hardness measured at 23 degrees C according to JIS-K6253.

In the present embodiment, the distance t2 from the ground contacting surface of the tread portion 2 to the boundary 25 between the cap tread rubber layer Cg and the base tread rubber layer Bg is in a range from 30% to 70% of the total thickness t1 of the cap tread rubber layer Cg and the base tread rubber layer Bg.

As shown in Fig.5, a minimum distance t3 in the tire radial direction from the boundary 25 to the bottoms of the first wide portion 21 and the second wide portion 22 is not less than 0.5 mm, preferably not less than 1.0 mm and not more than 4.0 mm. Thereby, the rubber separation at the boundary 25 due to deformation of the first wide portion 21 and the second wide portion 22, can be effectively suppressed.

While detailed description has been made of a preferable embodiment of the present invention, the present invention can be embodied in various forms without being limited to the illustrated embodiment.

### Description of the reference signs

2 tread portion
3 circumferential groove
10 lateral groove
13 first block
15 first sipe
16 first portion
16d sipe bottom in first portion
17 second portion
17d sipe bottom in second portion
18 tie bar
21 first wide portion
22 second wide portion
31 radially outer portion
31a first arcuate groove wall portion
32 radially inner portion
32a second arcuate groove wall portion

## Claims

1. A tire comprising a tread portion (2) provided with
a plurality of circumferential grooves (3) extending continuously in a tire circumferential direction,
a plurality of lateral grooves extending in a tire axial direction, and
a plurality of first blocks (13),
wherein
each of the first blocks (13) is provide with at least one first sipe (15) which extends zigzag in a cross section perpendicular to the length direction thereof, and extends zigzag in a cross section parallel with the ground contacting top surface (13s) of the first block (13),
each of the first sipes (15) is provided with at least one tie bar (18) which is locally raised outward in a tire radial direction from the sipe bottom (16d), and terminated without reaching the ground contacting top surface (13s) of the first block (13) so that the first sipe (15) is partially divided in the length direction of the sipe (15) by the above-said at least one tie bar (18) into at least a first portion (16) and a second portion (17),
in each of the first sipes (15), the sipe bottom (16d) of the first portion (16) communicates with a first wide portion (21) having a groove width larger than the sipe width of the first portion (16), and the sipe bottom of the second portion (17) communicates with a second wide portion (22) having a groove width larger than the sipe width of the second portion (17),
the above-said first wide portion (21) comprises, in its cross section,
an outer portion (31) in the tire radial direction formed by a pair of first arcuate groove wall portions (31a) each convex toward a center line (15c) of the first sipe (15) so that the groove width continuously increases from the sipe bottom toward the inner side in the tire radial direction, and
an inner portion (32) in the tire radial direction formed by a pair of second arcuate groove wall portions (32a) each convex toward the opposite side to the center line (15c) of the first sipe (15) so that the groove width continuously decreases inward in the tire radial direction to the bottom of the first wide portion (21), and
the first wide portion (21) and the second wide portion (22) do not communicate with each other,
**characterized in that**
a curvature radius (r1) of the first arcuate groove wall portion (31a) is larger than a curvature radius (r2) of the second arcuate groove wall portion (32a), wherein the curvature radius (r1) is not more than 5.0 times the curvature radius (r2).

2. The tire according to claim 1, wherein
the first wide portion (21) extends linearly along the length direction of the first portion (16) over its entire length.

3. The tire according to claim 1 or 2, wherein
the second wide portion (22) comprises a radially outer portion (41) and a radially inner portion (42),
in a cross section of the second wide portion (22), the radially outer portion (41) is formed by a pair of opposite first arcuate groove wall portions (41a) each convex toward a center line (15c) of the first sipe (15), so that the second wide portion (22) has a groove width continuously increasing from the bottom of the first sipe toward the inside in the tire radial direction, and
the radially inner portion (42) is formed by a pair of opposite second arcuate groove wall portions (42a) each convex toward the opposite side to the center line (15c) of the first sipe (15), so that the second wide portion (22) has a groove width continuously decreasing toward a bottom of the second wide portion (22).

4. The tire according to claim 3, wherein
the second wide portion (22) extends linearly along the length direction of the first sipe (15) in the second portion (17) over its entire length.

5. The tire according to claim 3, wherein
in the second wide portion (22), a curvature radius (r3) of the first arcuate groove wall portions (41a) is larger than a curvature radius (r4) of the second arcuate groove wall portions (42a).

6. The tire according to any one of claims 1 to 5, wherein
the maximum width (L1) of the first wide portion (21) in its cross section is 2.0 to 6.0 times the width of the first sipe (15) in its cross section.

7. The tire according to any one of claims 1 to 6, wherein
the maximum width (L2) of the second wide portion (22) in its cross section is 2.0 to 6.0 times the width of the first sipe (15) in its cross section.

8. The tire according to any one of claims 1 to 7, wherein
the plurality of first blocks (13) constitutes tread edges (Te) of the tread portion (2).

9. The tire according to any one of claims 1 to 8, wherein
a height (h1) in the tire radial direction from the bottom of the first wide portion (21) to a radially outer end of the tie bar (18) is 30% to 80% of a maximum depth (d3) from the ground contacting top surface (13s) of the first block (13) to the bottom of the first wide portion (21).

10. The tire according to any one of claims 1 to 9, wherein
a width of the tie bar (18) in a cross section along the length direction of the first sipe (15) is 0.5 to 5.0 mm.

## Patentansprüche

1. Reifen mit einem Laufflächenabschnitt (2), der versehen ist mit
einer Vielzahl von Umfangsrillen (3), die sich kontinuierlich in einer Reifenumfangsrichtung erstrecken,
einer Vielzahl von Querrillen, die sich in einer Reifenaxialrichtung erstrecken, und
einer Vielzahl von ersten Blöcken (13),
wobei
jeder der ersten Blöcke (13) mit mindestens einem ersten Feinschnitt (15) versehen ist, der sich in einem Querschnitt senkrecht zu seiner Längsrichtung zickzackförmig erstreckt und sich in einem Querschnitt parallel zu der den Boden berührenden oberen Oberfläche (13s) des ersten Blocks (13) zickzackförmig erstreckt,
jeder der ersten Feinschnitte (15) mit mindestens einem Anbindungssteg (18) versehen ist, der in einer Reifenradialrichtung von dem Feinschnittboden (16d) lokal nach außen erhöht ist und endet, ohne die den Boden berührende obere Oberfläche (13s) des ersten Blocks (13) zu erreichen, so dass der erste Feinschnitt (15) in der Längsrichtung des Feinschnitts (15) durch den oben genannten mindestens einen Anbindungssteg (18) teilweise in mindestens einen ersten Abschnitt (16) und einen zweiten Abschnitt (17) unterteilt ist,
in jedem der ersten Feinschnitte (15) der Feinschnittboden (16d) des ersten Abschnitts (16) mit einem ersten breiten Abschnitt (21) in Verbindung steht, der eine Rillenbreite aufweist, die größer als die Feinschnittbreite des ersten Abschnitts (16) ist, und der Feinschnittboden des zweiten Abschnitts (17) mit einem zweiten breiten Abschnitt (22) in Verbindung steht, der eine Rillenbreite aufweist, die größer als die Feinschnittbreite des zweiten Abschnitts (17) ist,
der oben genannte erste breite Abschnitt (21) in seinem Querschnitt aufweist
einen äußeren Abschnitt (31) in der Reifenradialrichtung, der durch ein Paar erste bogenförmige Rillenwandabschnitte (31a) gebildet ist, die jeweils zu einer Mittellinie (15c) des ersten Feinschnitts (15) hin konvex sind, so dass die Rillenbreite von dem Feinschnittboden zu der Innenseite in der Reifenradialrichtung hin kontinuierlich zunimmt, und
einen inneren Abschnitt (32) in der Reifenradialrichtung, der durch ein Paar zweite bogenförmige Rillenwandabschnitte (32a) gebildet ist, die jeweils zu der gegenüberliegenden Seite zu der Mittellinie (15c) des ersten Feinschnitts (15) hin konvex sind, so dass die Rillenbreite in der Reifenradialrichtung zu dem Boden des ersten breiten Abschnitts (21) kontinuierlich nach innen hin abnimmt, und
der erste breite Abschnitt (21) und der zweite breite Abschnitt (22) nicht miteinander in Verbindung stehen,
**dadurch gekennzeichnet, dass**
ein Krümmungsradius (r1) des ersten bogenförmigen Rillenwandabschnitts (31a) größer ist als ein Krümmungsradius (r2) des zweiten bogenförmigen Rillenwandabschnitts (32a), wobei der Krümmungsradius (r1) nicht mehr als das 5,0-fache des Krümmungsradius (r2) beträgt.

2. Reifen nach Anspruch 1, wobei der erste breite Abschnitt (21) sich linear entlang der Längsrichtung des ersten Abschnitts (16) über seine gesamte Länge erstreckt.

3. Reifen nach Anspruch 1 oder 2, wobei
der zweite breite Abschnitt (22) einen radial äußeren Abschnitt (41) und einen radial inneren Abschnitt (42) umfasst,
in einem Querschnitt des zweiten breiten Abschnitts (22) der radial äußere Abschnitt (41) durch ein Paar gegenüberliegende erste bogenförmige Rillenwandabschnitte (41a) gebildet ist, die jeweils zu einer Mittellinie (15c) des ersten Feinschnitts (15) hin konvex sind, so dass der zweite breite Abschnitt (22) eine Rillenbreite aufweist, die von dem Boden des ersten Feinschnitts zu der Innenseite in der Reifenradialrichtung hin kontinuierlich zunimmt, und
der radial innere Abschnitt (42) durch ein Paar gegenüberliegende zweite bogenförmige Rillenwandabschnitte (42a) gebildet ist, die jeweils zu der gegenüberliegenden Seite zu der Mittellinie (15c) des ersten Feinschnitts (15) hin konvex sind, so dass der zweite breite Abschnitt (22) eine Rillenbreite aufweist, die zu einem Boden des zweiten breiten Abschnitts (22) hin kontinuierlich abnimmt.

4. Reifen nach Anspruch 3, wobei der zweite breite Abschnitt (22) sich linear entlang der Längsrichtung des ersten Feinschnitts (15) in dem zweiten Abschnitt (17) über seine gesamte Länge erstreckt.

5. Reifen nach Anspruch 3, wobei in dem zweiten breiten Abschnitt (22) ein Krümmungsradius (r3) der ersten bogenförmigen Rillenwandabschnitte (41a) größer ist als ein Krümmungsradius (r4) der zweiten bogenförmigen Rillenwandabschnitte (42a).

6. Reifen nach einem der Ansprüche 1 bis 5, wobei die maximale Breite (L1) des ersten breiten Abschnitts (21) in seinem Querschnitt das 2,0- bis 6,0-fache der Breite des ersten Feinschnitts (15) in seinem Querschnitt beträgt.

7. Reifen nach einem der Ansprüche 1 bis 6, wobei die maximale Breite (L2) des zweiten breiten Abschnitts (22) in seinem Querschnitt das 2,0- bis 6,0-fache der Breite des ersten Feinschnitts (15) in seinem Querschnitt beträgt.

8. Reifen nach einem der Ansprüche 1 bis 7, wobei die Vielzahl von ersten Blöcken (13) Laufflächenkanten (Te) des Laufflächenabschnitts (2) bilden.

9. Reifen nach einem der Ansprüche 1 bis 8, wobei eine Höhe (h1) in der Reifenradialrichtung von dem Boden des ersten breiten Abschnitts (21) zu einem radial äußeren Ende des Anbindungsstegs (18) 30 % bis 80 % einer maximalen Tiefe (d3) von der den Boden berührenden oberen Oberfläche (13s) des ersten Blocks (13) zu dem Boden des ersten breiten Abschnitts (21) beträgt.

10. Reifen nach einem der Ansprüche 1 bis 9, wobei eine Breite des Anbindungsstegs (18) in einem Querschnitt entlang der Längsrichtung des ersten Feinschnitts (15) 0,5 bis 5,0 mm beträgt.

## Revendications

1. Pneumatique comprenant une portion formant bande de roulement (2) dotée
d'une pluralité de rainures circonférentielles (3) s'étendant en continu dans une direction circonférentielle du pneumatique,
d'une pluralité de rainures latérales s'étendant dans une direction axiale du pneumatique, et
d'une pluralité de premiers blocs (13),
dans lequel
chacun des premiers blocs (13) est doté d'au moins une première fente (15) qui s'étend en zigzag dans une section transversale perpendiculaire à la direction de la longueur de celle-ci, et qui s'étend en zigzag dans une section transversale parallèle à la surface de sommet de contact au sol (13s) du premier bloc (13),
chacune des premières fentes (15) est dotée d'au moins une barrette de liaison (18) qui est surélevée localement vers l'extérieur dans une direction radiale du pneumatique par rapport au fond de fente (16d), et qui se termine sans atteindre la surface de sommet de contact au sol (13s) du premier bloc (13) de telle sorte que la première fente (15) est en partie divisée dans la direction de la longueur de la fente (15) par ladite au moins une barrette de liaison précitée (18) en au moins une première portion (16) et une seconde portion (17),
dans chacune des premières fentes (15), le fond de fente (16d) de la première portion (16) communique avec une première portion large (21) ayant une largeur de rainure supérieure à la largeur de rainure de la première portion (16), et le fond de fente de la seconde portion (17) communique avec la seconde portion large (22) ayant une largeur de rainure supérieure à la largeur de rainure de la seconde portion (17),
ladite première portion large précitée (21) comprend, dans sa section transversale,
une portion extérieure (31) dans la direction radiale du pneumatique formée par une paire de premières portions de paroi de rainure arquées (31a) chacune étant convexe vers une ligne centrale (15c) de la première fente (15) de telle sorte que la largeur de rainure augmente en continu depuis le fond de fente vers le côté intérieur dans la direction radiale du pneumatique, et
une portion intérieure (32) dans la direction radiale du pneumatique formée par une paire de secondes portions de paroi de rainure arquées (32a) chacune étant convexe vers le côté opposé à la ligne centrale (15c) de la première fente (15) de telle sorte que la largeur de rainure diminue en continu vers l'intérieur dans la direction radiale du pneumatique jusqu'au fond de la première portion large (21), et
la première portion large (21) et la seconde portion large (22) ne communiquent pas l'une avec l'autre,
**caractérisé en ce que**
un rayon de courbure (r1) de la première portion de paroi de rainure arquée (31a) est supérieur à un rayon de courbure (r2) de la seconde portion de paroi de rainure arquée (32a), le rayon de courbure (r1) n'étant pas supérieur à 5,0 fois le rayon de courbure (r2).

2. Pneumatique selon la revendication 1, dans lequel
la première portion large (21) s'étend de manière linéaire le long de la direction de la longueur de la première portion (16) sur toute sa longueur.

3. Pneumatique selon la revendication 1 ou 2, dans lequel
la seconde portion large (22) comprend une portion radialement extérieure (41) et une portion radialement intérieure (42),
dans une section transversale de la seconde portion large (22), la portion radialement extérieure (41) est formée par une paire de premières portions de paroi de rainure arquées opposées (41a) chacune étant convexe vers une ligne centrale (15c) de la première fente (15), de telle sorte que la seconde portion large (22) a une largeur de rainure qui augmente en continu depuis le fond de la première fente vers l'intérieur dans la direction radiale du pneumatique, et
la portion radialement intérieure (42) est formée par une paire de secondes portions de paroi de rainure arquées opposées (42a) chacune étant convexe vers le côté opposé à la ligne centrale (15c) de la première fente (15), de telle sorte que la seconde portion large (22) a une largeur de rainure qui diminue en continu vers un second de la seconde portion large (22).

4. Pneumatique selon la revendication 3, dans lequel
la seconde portion large (22) s'étend de manière linéaire le long de la direction de la longueur de la première fente (15) dans la seconde portion (17) sur toute sa longueur.

5. Pneumatique selon la revendication 3, dans lequel
dans la seconde portion large (22), un rayon de courbure (r3) des premières portions de paroi de rainure arquées (41a) est supérieur à un rayon de courbure (r4) des secondes portions de paroi de rainure arquées (42a).

6. Pneumatique selon l'une quelconque des revendications 1 à 5, dans lequel la largeur maximum (L1) de la première portion large (21) dans sa section transversale est de 2,0 à 6,0 fois la largeur de la première fente (15) dans sa section transversale.

7. Pneumatique selon l'une quelconque des revendications 1 à 6, dans lequel la largeur maximum (L2) de la seconde portion large (22) dans sa section transversale est de 2,0 à 6,0 fois la largeur de la première fente (15) dans sa section transversale.

8. Pneumatique selon l'une quelconque des revendications 1 à 7, dans lequel la pluralité de premiers blocs (13) constituent des bords de bande de roulement (Te) de la portion formant bande de roulement (2).

9. Pneumatique selon l'une quelconque des revendications 1 à 8, dans lequel une hauteur (h1) dans la direction radiale du pneumatique depuis le fond de la première portion large (21) jusqu'à une extrémité radialement extérieure de la barrette de liaison (18) est de 30 % à 80 % d'une profondeur maximum (d3) depuis la surface de sommet de contact au sol (13s) du premier bloc (13) jusqu'au fond de la première portion large (21).

10. Pneumatique selon l'une quelconque des revendications 1 à 9, dans lequel
une largeur de la barrette de liaison (18) dans une section transversale le long de la direction de la longueur de la première fente (15) est de 0,5 à 5,0 mm.
